# EUROPEAN PATENT SPECIFICATION

(11) **EP 2 561 764 B1**
(45) Date of publication and mention of the grant of the patent: **20.02.2019**
(21) Application number: 11178411.2
(22) Date of filing: 23.08.2011
(51) Int. Cl.: A23D 7/005, A23G 3/54, A23G 3/34, A23G 1/54, A23G 1/30

(54) **Edible composition**
Essbare Zusammensetzung
Composition comestible

(43) Date of publication of application: 27.02.2013
(73) Proprietor: Kraft Foods R & D, Inc., Deerfield, IL 60015 (US)
(72) Inventor: Bousselet- Kilger, Fabienne, 81739 Munich (DE); Boguth, Guenther, 85296 Rohrbach (DE)
(74) Representative: Wilson Gunn

(56) References cited:
- WO-A1-95/21535
- WO-A1-2006/068994
- FR-A1- 2 759 255
- US-A- 5 425 957
- US-A1- 2007 098 853

## Description

### Technical Field

The present invention relates to an edible composition which is an oil-in-water emulsion, a method for making the same and edible items comprising the composition. The edible composition can in particular be used to produce a edible item in which an edible composition is encapsulated within a layer comprising starch. The edible item can be used to make yet more intricate edible products.

### Background of the Invention

Edible oil-in-water emulsions are known in general, examples of which include mayonnaise and salad dressings. Oil-in-water emulsions are also known in confectionery applications, such as ganache or alcohol-filled eggs (e.g. egg-nogg). However, conventional edible oil-in-water emulsions tend to be unsatisfactory. For instance, confectionery oil-in-water emulsions tend to be viscous, are overly sweet and/or have a very fatty texture.

Increasing the water content of oil-in-water emulsions impairs product quality and restricts the number of compatible processing technologies. Increasing water content can, for instance, cause texture instability and can also cause excessive migration of water into water-sensitive regions of a foodstuff. Increasing water content therefore increases the risk of spoilage.

Excessive moisture migration can in some cases be mitigated by erecting a barrier of some kind. For instance, this can be achieved in confectionery by encasing a high-water content composition in a so-called 'sugar crust'. This method involves depositing at elevated temperature a composition having a high sugar content into a starch mould which has a lower temperature. The composition is maintained in the starch mould for a prolonged period, during which time the composition cools and moisture migrates into the surrounding starch. The drop in temperature and loss of water conspire to make the composition unable to solubilise all the previously dissolved sugar and a sugar crust forms between the starch mould and the liquid composition. Whilst such a sugar crust can help to prevent excessive moisture migration, it has a strong impact upon taste and flavour, and therefore limits the scope of sugar encrusted confections.

Confections can alternatively be formed in starch-based moulds without the need for a sugar crust. However, confections formed without a sugar crust must be solid in order to retain their shape once removed from the mould. Examples of these products include marshmallow- and fondant-based items.

Moisture migration can also be impeded by fat-based moisture barriers. However, fat-based barriers increase the production cost of edible items and contribute to an unsatisfactory mouthfeel.

It is an object of the present invention to provide a edible composition having a light, fresh, liquid mouthfeel, has good texture stability and which can be used to make edible items such as confections which do not spoil upon storage. US-A-2007/0098853 describes a stabilised emulsion employed to produce shelf stable, controlled release, discreet, solid particles or pellets which contain an encapsulated/embedded component.

WO-A-95/21535 describes a whippable food product suitable for preparing a whipped confection with improved temperature stability and whipping performance.

FR-A-2759255 discloses a solid bar food similar to a fresh dairy product coated with a protective layer such as chocolate or icing paste.

### Summary of the Invention

A first embodiment of the present invention is an edible composition, which is an oil-in-water (O/W) emulsion comprising ≥30 wt.% and ≤38 wt.%-water, ≤30 wt.% total fat and has a water activity (a_{w}) at 20°C of ≥0.80.

The composition of the first embodiment provides a light, fresh, liquid mouthfeel to the consumer. Thus, the mouthfeel of the above composition is strikingly different to the fatty, oily mouthfeel of conventional oil-in-water emulsions. The composition of the first embodiment can therefore be used to prepare a range of edible items which also induce this pleasant mouthfeel. If the composition is a confectionery composition, it can, for instance, be deposited within a confectionery shell.

The composition of the first embodiment is also a very versatile material for use in producing more complex edible items. One such item comprises an edible composition which is an oil-in-water emulsion comprising ≥8 wt.% water and having a water activity (a_{w}) at 20°C of ≥0.65, the composition being encapsulated by a layer comprising starch. This edible item is a second embodiment of the present invention.

The edible item of the second embodiment also provides a pleasant mouthfeel to the consumer. In some embodiments, the mouthfeel is slightly more viscous when compared with the mouthfeel of the composition of the first embodiment, but the overall effect is similarly pleasant. The edible item of the second embodiment additionally benefits from the stability provided by the encapsulating layer. Moreover, the encapsulating layer comprising starch has little impact upon mouthfeel, and so the increased stability is not to the detriment of product quality.

The stability provided by the encapsulating layer is manifested both as a protective skin towards physical impact and as increased resistance to adverse storage conditions. For instance, the starch-based layer inhibits shape deformation caused by storing the edible item at a temperature which would otherwise cause the composition to flow.

The edible item of the second embodiment can, for instance, be produced by placing an edible composition according to the first embodiment into a cavity formed in the surface of a starch-based mould and depositing a composition comprising starch onto the exposed surface of the edible composition in the mould cavity so as to enclose the edible composition.

The edible item of the second embodiment is itself a very versatile intermediate which can be used to produce yet more complex edible products. One use of the edible item is to enrobe it with an edible material such as chocolate. Moreover, a plurality of edible items according to the second embodiment can be enrobed together to produce an edible product having a plurality of fillings. The edible item can also be accommodated within a confectionery shell as a so-called inclusion. A plurality of edible items according to the second embodiment can be included in the same edible product to produce ever more elaborate products.

The composition encapsulated within the edible item of the second embodiment sometimes has a lower water content than the composition of the first embodiment. Such lower water content reduces the risk of water migrating from the encapsulated composition into moisture-sensitive regions of an edible product comprising an edible item according to the second embodiment. The risk of spoilage is therefore mitigated.

### Brief Description of the Drawings

Figure 1: A method of producing an edible composition according to the first embodiment of the present invention.
Figure 2: A cross-section of an edible item (Figure 2d) and a method for producing the same (Figures 2a-2c), which is illustrated as a cross-sectional view of a mould cavity.

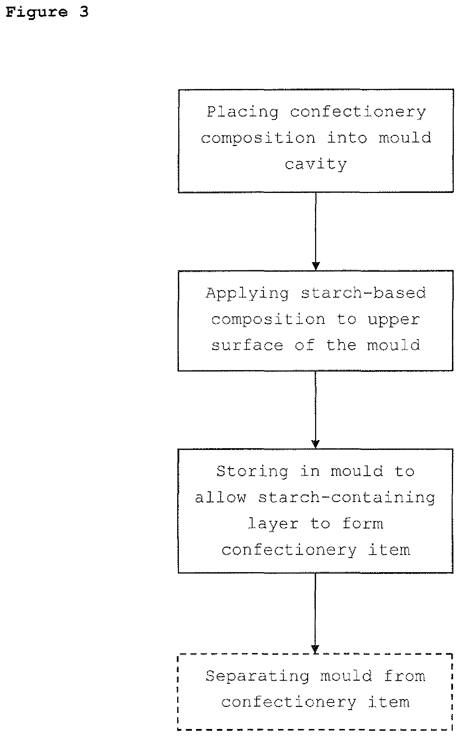

Figure 3: A method of producing an edible item using the edible composition of the first embodiment.

### Detailed Description of the Invention

Unless otherwise stated, a range described in terms of "X-Y" or "from X to Y" means a range including the values "X" and "Y". Unless otherwise stated, the term "average" denotes a mean average.

A composition according to the first embodiment of the present invention is described in detail below.

The edible composition according to the first embodiment is an oil-in-water (O/W) emulsion. That is, the composition comprises an oil-based phase dispersed within a continuous water-based phase. The size of droplets dispersed within the continuous phase is not particularly limited, and can sometimes be 1-20 µm, 1.5-17 µm or 2-15 µm.

The edible composition is not particularly limited, provided it can be safely consumed. In some embodiments, the edible composition can be a mayonnaise, a hollandaise sauce, a vinaigrette or a confectionery composition, the limitations of which would be familiar to the skilled person. For instance, the skilled person would understand a mayonnaise to comprise at least an oil, an emulsifier such as egg yolk and an acidifier such as vinegar of lemon juice.

In some embodiments, the composition is substantially non-aerated. That is to say, the composition is not processed to deliberately include bubbles of air or its constituent gases, but the non-aerated composition can tolerate the incidental inclusion of bubbles of air or its constituent gases during the course of production.

The water content of the composition is ≥ 30 wt.%, and can, in some embodiments, be ≥ 31 wt.% or ≥ 32 wt.%. A composition having water content of these values or above has improved mouthfeel to the consumer. In particular, the composition has a pleasing fresh, smooth texture. In some embodiments, the water content is ≤38 wt.%, which helps to prolong shelf life.

Water content can be measured by techniques known to the person skilled in the art, such as a sea sand hot air drying method. This technique comprises homogenising a composition with sea sand and drying the composition at 102°C until a constant weight is achieved. The total water content is determined by the absolute difference in weight before and after drying and the total solids content calculated from the difference to 100%.

The nature of the oil-based phase is not particularly limited, and may comprise one or more types of oil. In some embodiments, the oil-based phase comprises one or more oils having a melting point below 10°C or below 0°C. In some embodiments, the oil or oils include sunflower oil, soybean oil, corn oil, rapeseed oil, cottonseed oil, canola oil, coconut oil, rice bran oil, grapeseed oil, olive oil, palm oil, sesame oil or nut oils such as those of hazelnut, peanut, almond, cashew nut, macadamia nut, mongongo nut, pecan, pine nut, pistachio and walnut. In some embodiments, the oil or oils include sunflower oil, soybean oil and corn oil.

In some embodiments, the oil-content of the composition is 15-40 wt.%, 20-35 wt.% or 25-30 wt.%.

In some embodiments, the composition optionally contains one or more emulsifiers, which can be used to stabilise the oil-in-water emulsion. Emulsifiers therefore help to suppress emulsion instability, which can, for example, manifest itself as flocculation, creaming and/or coalescence. Suitable optional emulsifiers include surfactants, which can be naturally occurring of synthetic. Examples of suitable naturally occurring emulsifiers include whey protein concentrate, milk protein concentrate, egg protein concentrate and lecithins. Examples of suitable synthetic emulsifiers include sodium stearoyl lactate (additive E481) and E471.

The content of emulsifiers in the composition is not particularly limited, provided that there is sufficient emulsifier present to stabilise the emulsion where this is needed. In some embodiments, the total content of emulsifier is 0-5 wt.%, 0-3 wt.% or 0-1 wt.%.

The total fat content of the composition is ≤ 30 wt.% and can, in some embodiments, be ≤ 25 wt.%, ≤ 20 wt.%, ≤ 15 wt.% or ≤ 10 wt.%. Compositions in which the total fat content is within these ranges benefit from improved mouthfeel.

Total fat content can be measured by techniques known to the person skilled in the art. Total fat content is suitably determined by the Schmid-Bondzynski-Ratzlaff method in which the material is 'digested' by adding it to hydrochloric acid and heating to reflux followed by extracting fat-like substances with organic solvent. Evaporation of the organic solvent allows the residual fat to be weighed and the mass content of the material is calculated in g/100g.

Accordingly, components of the edible composition contributing to the total fat content are those which would be extracted by the organic solvent in the above method. Examples of which can, for instance, include oil-based components in the oil-based phase.

In some embodiments, the composition has a solid fat content at 20°C of ≤ 20% wt.%, ≤ 10% wt.% or ≤ 2% wt.%. Compositions in which the solid fat content is within these ranges can benefit from improved mouthfeel.

The solid fat content of the composition can be measured by techniques known to the person skilled in the art. A suitable measurement technique is low resolution pulsed NMR, which can be conducted using a Bruker Minispec® spectrometer.

The water activity (a_{w}) at 20°C of the composition is ≥0.80 and can, in some embodiments, be ≥0.82 or 20.85. A composition having a water activity in these ranges benefits from improved mouthfeel. In some embodiments, the water activity at 20°C is ≤0.96, ≤0.94 or ≤0.92. Compositions having a water activity above this range can suffer from a shortened shelf-life. "Water activity" is a term frequently used in the art, and is defined as the vapour pressure of a substance at a particular temperature divided by the vapour pressure of pure water at the same temperature. The water activity of water is therefore 1 and, for instance, the water activity of honey is typically 0.5-0.7.

Water activity of the composition can be measured by techniques known to the person skilled in the art. Water activity can suitably be measured using a dew point apparatus, such as an AquaLab® CX-2. In such apparatus, an air stream in equilibrium with the sample is directed at a cooled mirror as a condensing surface, which cools until a temperature is reached at which condensation begins (i.e. the dew point). Such measurements are repeated until a constant value is reached, and the instrument calculates the final a_{w} and temperature of the sample.

In some embodiments, the pH of the composition is in the range of 2-6 or 3-5, which is sometimes beneficial from the standpoint of microbiological safety. The pH of the composition can be controlled by optionally adding a pH-adjusting agent in an amount of 0-5 wt.%, 0-3 wt.% or 0-1 wt.%. In some embodiments, the pH-adjusting agent can be one or more of lactic acid, citric acid, acetic acid, phosphoric acid, tartaric acid or sodium, calcium, potassium and/or magnesium salts thereof, sodium carbonate and sodium bicarbonate.

In some embodiments, the dynamic viscosity of the composition at 20°C is from 0.1 to 6.0 Pa.s, from 0.2 to 4.5 Pa.s, or from 0.3 to 3.0 Pa.s when measured used a controlled-stress rheometer at a shear rate of 60 s⁻¹. A dynamic viscosity in these ranges exhibits improved mouthfeel to the consumer. In particular, the composition has a pleasing fresh, smooth texture.

Dynamic viscosity can be measured by techniques known to the person skilled in the art. A suitable technique is to average the results of a two-fold determination at a temperature of 20°C and a shear rate of ranging from 1 to 100 s⁻¹ (up and down) performed with a controlled-stress rheometer (Bohlin CVO 120) equipped with a 25 mm-diameter concentric cylinder geometry.

The composition optionally comprises a variety of other components. For instance, the composition optionally comprises sugar (i.e. sucrose) and/or one or more sugar substitutes such as mannitol, sorbitol, erythritol, aspartame, sucralose and saccharin. The total amount of sugar and/or sugar substitutes included in the composition can, in some embodiments, be 0-30 wt.% or 5-25 wt.%.

The composition optionally comprises one or more dairy products, examples of which include modified whey powder, sweet whey powder and skimmed milk powder. The total content of dairy products is, in some embodiments, 0-10 wt.%, 0-7 wt.% or 0-5 wt.%. In some embodiments, the total whey content of the composition is ≤10 wt.%, ≤8 wt.% or ≤6 wt.%,

The composition may optionally comprise one or more components for altering its flavour, which are sometimes referred to as flavourants. These components may alter the degree to which the composition is sweet, sour, bitter, salty or savoury. Suitable flavours include those of fruit, citrus fruit, chocolate, mint, caramel, cream, spices, coffee, toffee, nuts and plant extracts. The composition may also contain an alcoholic component, such as a liqueur or whisky.

In some embodiments, the composition may further independently comprise polyols such as maltitol, isomalt, sorbitol, mannitol, xylitol, lactitol, erythritol in an amount of 0-50 wt.%, glucose syrup in an amount of 0-15 wt.%, modified waxy maize cook-up starch in an amount of 0-3 wt.%, preservatives (e.g. potassium sorbate or alcohol) in an amount of 0-0.1 wt.% and aroma ingredients in an amount of 0-0.1 wt.%.

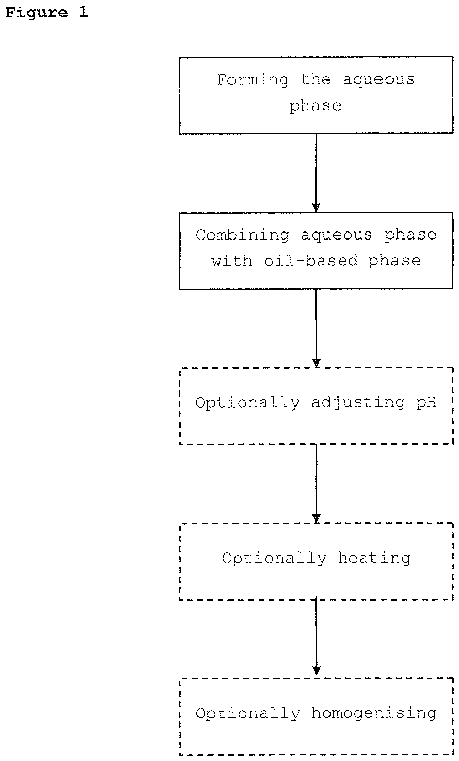

The composition of the first embodiment can, for instance, be produced according to the following method, which is shown schematically in Figure 1. The method includes:
(i) combining the components of the aqueous phase;
(ii) adding the oil-based phase to the mixture, optionally over a period of 1-20 minutes or 1-10 minutes;
(iii) optionally adding one or more pH-adjusting compounds, optionally over a period of 0-5 minutes or 0-2 minutes;
(iv) optionally heating the mixture to a temperature of 50-150°C, 60-130°C or 80-110 °C, optionally for a period of 30 seconds to 10 minutes or 1-5 minutes; and
(v) optionally homogenising the composition, optionally between 0 and 300 bars.

Depending upon the intended use of the composition, it can be used at its final production temperature or its temperature can be changed prior to use. For instance, if the composition is deposited inside a confectionery shell, the temperature of the composition is, in some embodiments, below the solidification temperature of the composition forming the confectionery shell so as to preserve the structural integrity of the shell. The confectionery shell may comprise one or more layers and, in some embodiments, at least one layer comprises milk chocolate, dark chocolate, white chocolate and/or compound chocolate. If the confectionery shell comprises more than one layer, at least one of the layers is, in some embodiments, a moisture barrier layer. In some embodiments, a moisture barrier layer is disposed between the composition of the first embodiment and a chocolate layer.

A further use of the composition of the first embodiment is to make an edible item, which can be a shape-stable yet soft item. This edible item is a second embodiment of the invention, and will be described below.

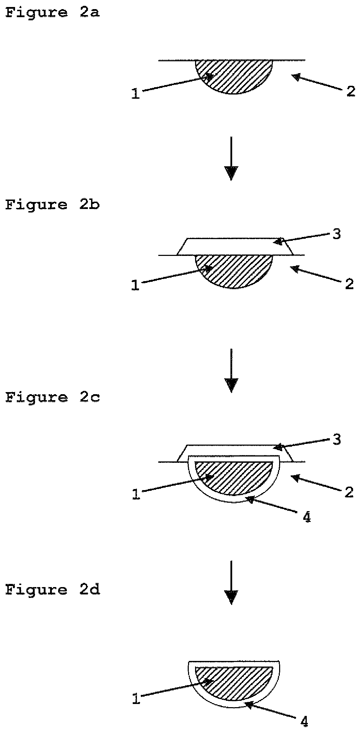

The edible item of the second embodiment comprises a composition (1) encapsulated by a layer comprising starch (4), as shown in Figure 2d. "Encapsulated" here means that the composition is fully enveloped by the layer containing starch. Because the edible item of the second embodiment can be produced using the edible composition of the first embodiment, the edible item can sometimes comprise an encapsulated mayonnaise, hollandaise sauce, vinaigrette or confectionery composition.

The shape of the edible item is not particularly limited. Suitable shapes include those of a sphere, a hemisphere, an ovoid, a trapezoid and more complex shapes such as that of an animal.

The size of the edible item is not particularly limited, and can be altered as desired. In some embodiments, the smallest dimension of the edible item is ≥ 2 mm, ≥ 3 mm ≥ 5 mm, ≥ 8 mm or ≥ 10 mm. This can help to preserve the structural integrity of the edible item. In some embodiments, the largest dimension of the edible item is ≤ 50 mm, ≤ 35 mm, ≤ 20 mm or ≤ 10 mm. This helps to make the item easier to handle during manufacture.

The average thickness of the layer comprising starch is not particularly limited. In some embodiments, structural integrity is improved when the average thickness of the layer comprising starch is ≥ 0.2 mm, ≥ 0.3 mm or ≥ 0.4 mm. In some embodiments, the average thickness of the layer comprising starch is ≤ 1.0 mm, ≤ 0.9 mm or ≤ 0.8 mm, which lessens any impact on the overall taste and mouthfeel of the edible item.

In some embodiments, the starch content of the layer comprising starch is ≥ 70 wt.%, ≥ 80 wt.% or ≥ 90 wt.%. The type of starch used is not particularly limited and can, for instance, be maize starch.

The water content of the layer comprising starch is, in some embodiments, ≥ 0.5 wt.%, ≥ 0.7 wt.% or ≥ 1.0 wt.%. Further, the water content is, in some embodiments, ≤ 10 wt.%, ≤ 7 wt.%, ≤ 5 wt.%.

The layer comprising starch may optionally comprise one or more oils, such as food grade mineral oil. In some embodiments, the total oil content is ≤ 5 wt.%, ≤ 3 wt.% or ≤ 1 wt.%.

In some embodiments, the layer comprising starch contains little or no sugar, and the content is sometimes ≤ 10 wt.%, ≤ 5 wt.% or ≤ 3 wt.%. In some embodiments, the layer comprising starch may also be substantially free of sugar substitutes, such as such as mannitol, sorbitol, erythritol, aspartame, sucralose and saccharin. The total content of sugar substitutes is sometimes ≤ 10 wt.%, ≤ 5 wt.% or ≤ 3 wt.%.

The water content of the edible composition encapsulated by the layer comprising starch is ≥ 8 wt.% and, in some embodiments, is ≥ 10 wt.% or ≥ 15 wt.%. In some embodiments, the water content is ≤ 40 wt.%, ≤ 30 wt.% or ≤ 20 wt.%. The encapsulated edible composition otherwise comprises the components mentioned above in relation to the first embodiment. However, the properties of the composition can, in some embodiments, be different.

The water activity (a_{w}) at 20°C of the composition is ≥0.65 and can, in some embodiments, be ≥0.70 or ≥0.73. In some embodiments, the water activity of the composition prior to encapsulation is more than the water activity after encapsulation due to water being lost to the surround starch-based material during the encapsulating process.

In some embodiments, the total fat content of the edible composition encapsulated by the layer comprising starch can be ≤ 40 wt.%, ≤ 35 wt.%, ≤ 30 wt.%, ≤ 25 wt.% or ≤ 20 wt.%. Compositions in which the total fat content is within these ranges benefit from improved mouthfeel.

In some embodiments, the pH of the composition is in the range of 1-7, 2-6 or 3-5, which is sometimes beneficial from the standpoint of microbiological safety. The pH of the composition can optionally be controlled by adding a pH-adjusting agent in an amount of 0-5 wt.%, 0-3 wt.% or 0-1 wt.%. A pH-adjusting agent is something which varies the pH and can be a basic compound for raises pH or an acidic compound for lowering pH. In some embodiments, the pH-adjusting agent is the same as described above for the first embodiment.

In some embodiments, the dynamic viscosity of the composition at 20°C is from 2.0 to 30.0 Pa.s, from 3.0 to 25.0 Pa.s, or from 4.0 to 15.0 Pa.s when measured using a controlled-stress rheometer at a shear rate of 60 s⁻¹. A dynamic viscosity in these ranges provides improved mouthfeel to the consumer. In particular, the composition has a pleasing fresh, smooth texture.

The composition encapsulated by the layer comprising starch provides a very satisfying mouthfeel to the consumer. One of the benefits of the layer comprising starch is that it defines the surface shape of the composition and prevents the surface shape from deforming substantially. This enables the edible item to be stored for longer periods and therefore increases its shelf-life. This also makes the edible item more convenient to consume because the layer-comprising starch inhibits the surface of the composition deforming during manual handling by the consumer. Furthermore, the layer comprising starch has the benefit of having little impact upon the overall mouthfeel of the edible item to the consumer when compared to, for instance, a so-called 'sugar crust' .

The edible item is moreover a versatile component with which to make more complex edible products. The edible item can, for instance, be enrobed to form an enrobed product. The edible item can be enrobed with chocolate such as milk, dark, white or compound chocolate or a mixture thereof. Furthermore, a plurality of edible items can be enrobed together, thereby forming a single product having a plurality of encapsulated fillings. The plurality of filings can be the same or different, which therefore provides a way of making yet more complex products.

If the edible item of this embodiment is a confectionery item, it can also be used as an 'inclusion', which is to say that the confectionery item can be accommodated within a confectionery shell. Moreover, a plurality of confectionery items can be included within the confectionery shell, and the plurality of inclusions can be the same or different. The use of a plurality of different inclusions thereby provides a yet more complex confection.

The edible item of the second embodiment can, for instance, be produced by the process depicted in Figures 2a to 2d. In this process, an edible composition (1) according to the first embodiment of the invention is placed into a mould cavity formed in a starch-based mould (2). In some embodiments, the edible composition can be a mayonnaise, a hollandaise sauce, a vinaigrette or a confectionery composition.

The shape and size of the mould cavity is not particularly limited, provided that it enables the satisfactory formation of a layer encapsulating the edible composition. The mould may contain a number of mould cavities, the shape and dimensions of which can be the same of different. The starch-based mould is sometimes formed from a powdered composition. This promotes the formation of the encapsulating layer and eases the separation of the formed edible item from the remainder of the mould.

In some embodiments, the starch content of the mould comprising starch is ≥ 80 wt.%, ≥ 88 wt.% or ≥ 90 wt.%. The type of starch used is not particularly limited and can, for instance, be maize starch.

In some embodiments, the water content of the starch-based mould is ≥ 3 wt.% or ≥ 5 wt.%. Further, the water content is, in some embodiments, ≤ 20 wt.% or ≤ 10 wt.%.

The starch-based mould may also optionally comprise one or more oils, such as food grade mineral oil. In some embodiments, the total oil content is ≤ 5 wt.%, ≤ 3 wt.% or ≤ 1 wt.%.

In some embodiments, the starch-based mould contains little or no sugar. The content of sugar can, for instance, be ≤ 10 wt.%, ≤ 3 wt.%, ≤ 1 wt.% or ≤ 0.5 wt.%. The layer comprising starch may, in some embodiments, also be substantially free of sugar substitutes, such as such as mannitol, sorbitol, erythritol, aspartame, sucralose and saccharin. In some embodiments, the total content of sugar substitutes is ≤ 10 wt.%, ≤ 3 wt.%, ≤ 1 wt.% or ≤ 0.5wt.%.

The edible composition (1) can be deposited into the mould cavity manually or using a conventional depositor such as a multi-nozzle depositor which deposits material into multiple cavities simultaneously. The mould cavity can be partially or completely filled by the edible composition. In some embodiments, the temperature of the edible composition immediately prior to being deposited is 50-130°C, 60-120°C, 70-110°C or 80-90°C. In some embodiments, a composition at these temperatures has a viscosity which renders the composition easier to dose.

A layer (3) comprising starch is applied to the upper surface of the mould in order to cover any exposed surface of the edible composition (1), as shown in Figure 2b. The layer need not, therefore, be a continuous layer covering the whole surface of the mould, provided that the exposed surface of the edible composition is covered. The method by which the layer (3) is applied to the mould is not particularly limited. In some embodiments, applying the layer (3) does not substantially disturb the surface of the edible composition (1). The layer can, for instance, be suitably deposited by dusting.

The layer applied to the upper surface of the starch-based mould has a composition as described above for the starch-based mould. The composition of the layer applied to the upper surface of the starch-based mould can be the same as or different to the composition of the starch-based mould itself. In some embodiments, the compositions are the same.

The edible composition remains in the covered starch-based mould for a period of time, which allows the layer comprising starch to form around the edible composition. The period of time is not particularly limited, provided that the encapsulating layer forms with sufficient structural strength to withstand further processing steps. In some embodiments, the edible composition is kept in the starch-based mould for ≥ 1 hour, ≥ 6 hours, or ≥ 12 hours. From the viewpoint of speed of production, the edible composition is, in some embodiments, kept in the starch-based mould for ≤ 2 days, ≤ 1 day or ≤ 18 hours. The temperature of the mould during the storage period is, in some embodiments 5-50°C or 10-45°C.

The method by which the edible item is separated from the mould is not particularly limited, provided that the method does not inflict unwanted damage upon the edible item. The edible item is, in some embodiments, removed from the starch-based mould by sieving. This can be achieved by forming the mould above a sieve which can then be moved or adjusted to allow the mould material to fall through its holes and therefore capture the edible items above the sieve.

The present invention is further illustrated by the following Examples, which should not in any way be construed as limiting the scope of the invention.

### Examples

### Example 1

The following components were added to a Thermomix® food blender and mixed at 90°C for 3 minutes:

| | (wt.%) | (g) |
|---|---|---|
| Water | 23.3 | 23.3 |
| Saccharose | 5.0 | 5.0 |
| Sorbitol syrup | 25.0 | 25.0 |
| Glucose syrup | 9.4 | 9.4 |
| Modified whey powder | 6.0 | 6.0 |
| Modified waxy maize cook up starch | 2.0 | 2.0 |
| Whey protein concentrate 80 | 1.0 | 1.0 |
| Potassium sorbate | 0.1 | 0.1 |
| Nat. Mangostane-Arome 1100606211 Silesia | 0.1 | 0.1 |

Corn oil (27.6 g, 27.6 wt.%) was added over a period of 3 minutes to produce an emulsion. Citric acid, (0.5 g, 0.5 wt.%) was added and the emulsion was heated to 90°C for 3 minutes. A sample of the emulsion was cooled to 20°C for analysis, the results of which are shown in Table 1.

### Example 2

Example 2 was conducted in the same manner as Example 1, except that the composition prior to the addition of corn oil comprised the following:

| | (wt.%) | (g) |
|---|---|---|
| Water | 23.3 | 23.3 |
| Glycerol | 5.0 | 5.0 |
| Sorbitol (70% w/w aqueous solution) | 20.0 | 20.0 |
| Sugar (Saccharose?) | 5.0 | 5.0 |
| Glucose syrup | 9.4 | 9.4 |
| Modified waxy maize starch E1422 | 2.0 | 2.0 |
| Whey protein concentrate 80 | 1.0 | 1.0 |
| Potassium sorbate | 0.1 | 0.1 |
| Nat. Mangostane-Arome 1100606211 | 0.1 | 0.1 |
| Maltodextrin | 6.0 | 6.0 |

Certain aspects of Examples 1 and 2 are shown in Table 1 below.

The properties set out in Table 1 were measured by the following methods:
Water content: The material to be analysed was homogenised with sea sand and heated at 102 °C until a constant weight was achieved (approx. 0.5h). The moisture content is determined by the absolute difference in weight before and after drying and the total solids content calculated from the difference to 100%.

Fat content: Determined by the Schmid-Bondzynski-Ratzlaff method, in which the material is 'digested' by adding it to hydrochloric acid and heating to reflux, followed by extracting fat-like substances with organic solvent. Evaporation of the solvent allows the residual fat to be weighed and the mass content of the material is calculated in g/100g.

Water Activity (A_{w}): measured by means of an AquaLab® CX-2 dew point apparatus, wherein an air stream in equilibrium with the sample is directed at a cooled mirror as a condensing surface, which cools until a temperature is reached at which condensation begins (i.e. the dew point). Such measurements are repeated until a constant value is reached, and the instrument calculates the final a_{w} and temperature of the sample.

pH: measured at 20°C using a calibrated pH electrode.

Viscosity: dynamic viscosity was measured by averaging the results of a two-fold determination at a temperature of 20°C and a shear rate of 60 s⁻¹ performed with a controlled-stress rheometer (Bohlin CVO 120) equipped with a 25 mm-diameter concentric cylinder geometry.

| **Ex.** | **Water Content (wt.%)** | **Total Fat (wt.%)** | **A_{w}** | **pH** | **Viscosity (Pa.s)** | **Result** |
|---|---|---|---|---|---|---|
| Ex.1 | 30.1 | 28.6 | 0.86 | 3.48 | 1.8 | Stable Emulsion |
| Ex.2 | 30.9 | 27.6 | 0.89 | - | 0.4 | Stable Emulsion |

The emulsions prepared in Example 1 and Example 2 were found to be oil-in-water by gradually adding water (100 mL) to 50 g of the composition and visually observing the composition immediately after addition and after overnight storage at ambient temperature for any sign of phase separation/destabilisation. Oil-in-water emulsion confirmed on account of there being no observed phase separation of destabilisation. The size of oil droplets (determined by brightfield microscopy) was 3-13 µm and 1 to 37 µm respectively. The emulsions were also found to be stable towards coalescence.

### Example 3

The composition produced in Example 2 was cooled to 27°C and manually deposited into a confectionery shell made from Milka® chocolate mass (produced by Kraft Foods). The filled confectionery shell was cut open to facilitate tasting of the filling.

A panel of persons trained to judge the texture and mouthfeel of confectionery products was convened in order to analyse the filling of the so-formed confection. Upon analysis, the panel unanimously concluded that the filling had a very soft and smooth feel in the mouth which had the feeling of quickly and homogeneously melting on the tongue. A velvety/silky feeling was also noted on the tongue.

### Example 4

The confectionery composition produced in Example 1 was manually dosed at 80-90°C into cavities formed in a starch-based mould. The starch-based mould was formed from a bed of starch (produced by Kraft® Foods; 5-13 wt.% moisture content and 0.1 wt.% mineral oil) in which hemispherical depressions having a diameter of 15 mm were made to form mould cavities. A starch-based layer (the same material as used to make the mould) was dusted on the surface of the mould and the covered confectionery compositions were stored for 24 hours at 30°C. The confectionery items were removed from the mould by sieving and then analysed.

### Reference Example 5

Reference Example 5 was conducted in the same manner as Example 4 except that the composition was stored in the moulds for 4 days and that the confectionery composition used was a fruit paste having a total sugar content of 49.5 wt.%, water content of 23.1 wt.%, and a pH of 3.23 at 20°C.

### Reference Example 6

Reference Example 6 was conducted in the same manner as Example 4, except that the confectionery composition was replaced with mayonnaise having a water content of 63.2 wt.%, pH 3.2 and 22.5 wt.% fat.

### Comparative Example 1

Comparative Example 1 was performed in the same manner as Example 4 except that liquid honey was used as the confectionery composition. The encapsulating starch-based layer lacked stability and was prone to rupture even after having been stored in the starch-based mould for 4 days. Certain aspects of Examples 4-6 and Comparative Example 1 are shown in Table 2 below.

In Table 2, the properties were measured according to the methods mentioned above for Table 1.

| Ex. /C. Ex | Water content (wt.%) | Aw | Viscosity (Pa.s) | Result |
|---|---|---|---|---|
| Ex. 4 | 18.5 | 0.76 | 9.5 | Acceptable Stability |
| Ref. Ex.5 | 23.1* | - | - | Acceptable Stability |
| Ref. Ex.6 | 63.2* | 0.96* | 2.6* | Acceptable Stability |
| C.Ex. 3 | 17.7 | 0.59 | 16.9* | Unacceptable Stability |

| | | | | |
|---|---|---|---|---|
| * Measured before deposited in starch. | | | | |

The edible items produced in Examples 4-6 were found to have acceptable stability. On the other hand, the edible item of Comparative Example 3, having a honey filling, was found to be too fragile to allow reasonable handling.

### Example 7

The composition produced in Example 2 was processed according to the method explained in Example 4 to produce a confectionery item, which was then cut open to facilitate assessment of the filling. A panel of persons trained to judge the texture and mouthfeel of confectionery products was convened in order to analyse the filling of the so-formed confection. Upon analysis, the panel unanimously concluded that the filling had a very soft and smooth feel in the mouth which had the feeling of quickly and homogeneously melting on the tongue. A velvety/silky feeling was also noted on the tongue.

## Claims

1. An edible composition, which is an oil-in-water (O/W) emulsion comprising from 30 to 38wt.% water and ≤30 wt.% total fat, and has a water activity (a_{w}) at 20°C of ≥0.80.

2. A composition according to Claim 1 wherein the water activity at 20°C is ≥0.82.

3. A composition according to Claim 1 or Claim 2, comprising ≤20 wt.% solid fat at 20°C.

4. A composition according to any preceding claim, wherein the pH of the composition is from 2 to 6.

5. A composition according to any preceding claim, wherein the dynamic viscosity of the composition is from 0.1 to 6.0 Pa.s at a temperature of 20°C and a shear rate of 60 s⁻¹ as measured by controlled-stress rheometer equipped with a 25 mm diameter concentric cylinder geometry.

6. A composition according to any preceding claim, having a whey content of ≤10 wt.%.

7. A composition according to any preceding claim, wherein the composition is a confectionery composition.

8. A method of producing a composition as defined in any of Claims 1-7, wherein the combined oil and aqueous phases are subjected to a temperature of 50-150°C for a period of 30 seconds or more.

9. A confection comprising a confectionery shell and a confectionery composition as defined in Claim 7 within the shell.

10. A confection according to Claim 9, wherein the confectionery shell is a chocolate shell or a shell comprising chocolate.

11. A method of producing an edible item, the method comprising:
placing an edible composition as defined in any of Claims 1- 7 into a cavity formed in the surface of a starch-based mould; and
depositing a composition comprising starch onto the surface of the edible composition in the cavity so as to enclose the edible composition.

12. An edible item comprising an edible composition which is an oil-in-water emulsion, wherein the edible item comprises ≥ 8 wt.% water and has a water activity (a_{w}) at 20°C of ≥0.65, the edible composition being encapsulated by a layer comprising starch, wherein the edible item is obtainable by a method according to Claim 11.

13. An edible item according to Claim 12, wherein the starch content of the layer comprising starch is ≥70 wt.%.

14. An edible item according to Claims 12 or Claim 13, wherein the average thickness of the layer comprising starch is from 0.2 to 1.0 mm.

15. An edible item according to any of Claims 12 to 14, wherein the encapsulated composition is a confectionery composition.

16. A confection comprising one or more confectionery items according to Claim 5.

## Patentansprüche

1. Essbare Zusammensetzung, die eine Öl-in-Wasser(O/W)-Emulsion ist, die zu 30 bis 38 Gew.-% Wasser und ≤ 30 Gew.-% Gesamtfett umfasst und eine Wasseraktivität (a_{w}) bei 20 °C von ≥ 0,80 aufweist.

2. Zusammensetzung nach Anspruch 1, wobei die Wasseraktivität bei 20 °C ≥ 0,82 beträgt.

3. Zusammensetzung nach Anspruch 1 oder Anspruch 2, umfassend zu ≤ 20 Gew.-% festes Fett bei 20 °C.

4. Zusammensetzung nach einem der vorstehenden Ansprüche, wobei der pH-Wert der Zusammensetzung 2 bis 6 beträgt.

5. Zusammensetzung nach einem der vorstehenden Ansprüche, wobei die dynamische Viskosität der Zusammensetzung 0,1 bis 6,0 Pas bei einer Temperatur von 20 °C und einer Schergeschwindigkeit von 60 s⁻¹ beträgt, wie mit einem Schubspannungsrheometer gemessen, das mit einer konzentrischen Zylindergeometrie mit einem Durchmesser von 25 mm ausgestattet ist.

6. Zusammensetzung nach einem der vorstehenden Ansprüche, die einen Molkegehalt von ≤ 10 Gew.-% aufweist.

7. Zusammensetzung nach einem der vorstehenden Ansprüche, wobei die Zusammensetzung eine Süßwarenzusammensetzung ist.

8. Verfahren zum Herstellen einer Zusammensetzung nach einem der Ansprüche 1-7, wobei die kombinierte Öl- und Wasserphase für einen Zeitraum von 30 Sekunden oder mehr einer Temperatur von 50-150 °C ausgesetzt werden.

9. Konfekt, umfassend eine Süßwarenhülle und eine Süßwarenzusammensetzung nach Anspruch 7 innerhalb der Hülle.

10. Konfekt nach Anspruch 9, wobei die Süßwarenhülle eine Schokoladenhülle oder eine Hülle, die Schokolade umfasst, ist.

11. Verfahren zum Herstellen eines essbaren Gegenstands, wobei das Verfahren Folgendes umfasst:
Anordnen einer essbaren Zusammensetzung nach einem der Ansprüche 1-7 in einem Hohlraum, der in der Oberfläche einer stärkebasierten Form gebildet ist; und
Anlagern einer Stärke umfassenden Zusammensetzung an der Oberfläche der essbaren Zusammensetzung in dem Hohlraum, um die essbare Zusammensetzung zu umschließen.

12. Essbarer Gegenstand, umfassend eine essbare Zusammensetzung, die eine ÖI-in-Wasser-Emulsion ist, wobei der essbare Gegenstand zu ≥ 8 Gew.-% Wasser umfasst und eine Wasseraktivität (a_{w}) bei 20 °C von ≥ 0,65 aufweist, wobei die essbare Zusammensetzung mit einer Stärke umfassenden Schicht verkapselt ist, wobei der essbare Gegenstand durch ein Verfahren nach Anspruch 11 herstellbar ist.

13. Essbarer Gegenstand nach Anspruch 12, wobei der Stärkegehalt der Stärke umfassenden Schicht ≥ 70 Gew.-% beträgt.

14. Essbarer Gegenstand nach Anspruch 12 oder Anspruch 13, wobei die durchschnittliche Dicke der Stärke umfassenden Schicht 0,2 bis 1,0 mm beträgt.

15. Essbarer Gegenstand nach einem der Ansprüche 12 bis 14, wobei die verkapselte Zusammensetzung eine Süßwarenzusammensetzung ist.

16. Konfekt, umfassend einen oder mehrere Süßwarengegenstände nach Anspruch 5.

## Revendications

1. Composition comestible, qui est une émulsion huile-dans-eau (H/E) comprenant de 30 à 38 % en poids d'eau et ≤30 % en poids de matière grasse totale, et a une activité de l'eau (a_{w}) à 20 °C ≥0,80.

2. Composition selon la revendication 1, dans laquelle l'activité de l'eau à 20 °C est ≥0,82.

3. Composition selon la revendication 1 ou la revendication 2, comprenant ≤20 % en poids de matière grasse solide à 20 °C.

4. Composition selon une quelconque revendication précédente, dans laquelle le pH de la composition va de 2 à 6.

5. Composition selon une quelconque revendication précédente, dans laquelle la viscosité dynamique de la composition va de 0,1 à 6,0 Pa.s à une température de 20 °C et à un taux de cisaillement de 60 s⁻¹ telle que mesurée par un rhéomètre à contrainte contrôlée équipé d'une géométrie de cylindre concentrique de 25 mm de diamètre.

6. Composition selon l'une quelconque des revendications précédentes, ayant une teneur en lactosérum ≤10 % en poids.

7. Composition selon une quelconque revendication précédente, dans laquelle la composition est une composition de confiserie.

8. Procédé de production d'une composition telle que définie dans l'une quelconque des revendications 1 à 7, dans lequel les phases huileuse et aqueuse combinées sont soumises à une température de 50 à 150 °C pendant une période de 30 secondes ou plus.

9. Confiserie comprenant une coque de confiserie et une composition de confiserie telle que définie dans la revendication 7 au sein de la coque.

10. Confiserie selon la revendication 9, dans laquelle la coque de confiserie est une coque en chocolat ou une coque comprenant du chocolat.

11. Procédé de production d'un article comestible, le procédé comprenant :
la mise en place d'une composition comestible telle que définie dans l'une quelconque des revendications 1 à 7 dans une cavité formée dans la surface d'un moule à base d'amidon ; et
le dépôt d'une composition comprenant de l'amidon sur la surface de la composition comestible dans la cavité de façon à entourer la composition comestible.

12. Article comestible comprenant une composition comestible qui est une émulsion huile-dans-eau, dans lequel l'article comestible comprend ≥ 8 % en poids d'eau et a une activité de l'eau (a_{w}) à 20 °C ≥0,65, la composition comestible étant encapsulée par une couche comprenant de l'amidon, dans lequel l'article comestible peut être obtenu par un procédé selon la revendication 11.

13. Article comestible selon la revendication 12, dans lequel la teneur en amidon de la couche comprenant de l'amidon est ≥70 % en poids.

14. Article comestible selon les revendications 12 ou la revendication 13, dans lequel l'épaisseur moyenne de la couche comprenant de l'amidon va de 0,2 à 1,0 mm.

15. Article comestible selon l'une quelconque des revendications 12 à 14, dans lequel la composition encapsulée est une composition de confiserie.

16. Confiserie comprenant un ou plusieurs articles de confiserie selon la revendication 5.
